# EUROPÄISCHE PATENTSCHRIFT

(11) **EP 1 171 309 B1**
(45) Veröffentlichungstag und Bekanntmachung des Hinweises auf die Patenterteilung: **02.05.2003**
(21) Anmeldenummer: 00917031.7
(22) Anmeldetag: 31.03.2000
(51) Int. Cl.: B41M 3/14, G07D 7/00, B42D 15/00, B42D 15/10, C09D 11/00, C09K 9/02, C09K 11/06, G09F 3/00

(54) **VERFAHREN UND ZUBEREITUNG ZUR PHOTOCHROMEN MARKIERUNG UND/ODER SICHERUNG DER AUTHENTIZITÄT VON GEGENSTÄNDEN**
METHOD AND PREPARATION FOR THE PHOTOCHROMIC MARKING AND/OR FOR SECURING THE AUTHENTICITY OF OBJECTS
PROCEDE ET PREPARATION DE MARQUAGE PHOTOCHROME ET/OU DE GARANTIE DE L'AUTHENTICITE D'OBJETS

(30) Priorität: 31.03.1999 DE 19914702
(43) Veröffentlichungstag der Anmeldung: 16.01.2002
(73) Patentinhaber: HAMPP, Norbert, 35287 Amöneburg-Rossdorf (DE)
(72) Erfinder: HAMPP, Norbert, D-35287 Amöneburg-Rossdorf (DE); SEITZ, Arne, D-35037 Marburg (DE)
(74) Vertreter: Tiesmeyer, Johannes, Dipl.-Phys. Dr.
(86) Internationale Anmeldenummer: EP0002905
(87) Internationale Veröffentlichungsnummer: WO00059731

(56) Entgegenhaltungen:
- WO-A-98/06084
- DE-A- 19 514 247
- US-A- 5 807 625
- D.WEBER ET AL.: ""Novel implementation of nonlinear joint transform correlators in optical security and validation"" OPTICAL ENGINEERING., Bd. 38, Nr. 1, Januar 1999 (1999-01), Seiten 62-68, XP000822176 SOC. OF PHOTO-OPTICAL INSTRUMENTATION ENGINEERS. BELLINGHAM, US ISSN: 0091-3286

## Beschreibung

Die Erfindung betrifft ein Verfahren zur Sicherung der Authentizität eines Gegenstandes durch Applizieren einer photochromen Tinte auf den Gegenstand.

Sicherheitstechnische Anwendungen zur Sicherung der Authentizität von Dokumenten oder Gegenständen umfassen den Einsatz geeigneter Sicherungsmerkmale oder Authentisierungsmarkierungen. Die Verwendung photochromer Materialien für sicherheitstechnische Anwendungen wurde z. B. in US 4 927 180 beschrieben. Das photochrome Identifizierungsmerkmal wird bei den bekannten Beispielen durch den Einsatz von UV-Licht sichtbar gemacht. Als solches ist das verwendete Identifizierungsmerkmal aber nicht oder nur schlecht zu erkennen, so dass die Gefahr besteht, dass der Anwender das Fehlen des Identifizierungsmerkmals nicht bemerkt. Für die Augen des Authentizitäts-Prüfers ist wegen der Verwendung von UV-Licht ein geeigneter Schutz notwendig. Die Verwendung von UV-Licht zur Identifizierung des Sicherheitsmerkmals kann deswegen als unvorteilhaft angesehen werden. Ein ähnlicher Stand der Technik ist in US 5 807 625 dargelegt. Wiederum gelangt hier UV-Licht zur Sichtbarmachung des Sicherheitsmerkmals zum Einsatz.

Organische photochrome Materialien, die in den genannten Dokumenten offenbart sind, weisen eine typische Schaltzyklenzahl von 10⁴ - 10⁵ auf. Hierdurch ist die Zahl der möglichen Prüfvorgänge zur Identifizierung des Sicherheitsmerkmals begrenzt. Ein Einsatz für automatisierte Testverfahren, wie z.B. in Geldautomaten oder Zugangskontrolleinrichtungen, ist deshalb für die genannten Sicherheitsmerkmale nicht oder nur bedingt möglich.

Wünschenswert ist weiterhin, eine bestimmte Charge einer Markierungszubereitung identifizieren zu können und z.B. so bei Verlust oder unrechtmäßiger Entwendung der für Sicherungszwecke hergestellten Zubereitungen den jeweiligen Ursprung feststellen zu können. Die in den genannten Dokumenten zum Stand der Technik offenbarten Sicherheitsmerkmale sind für derartige Anwendungen nicht verwendbar.

Konventionelle photochrome Materialien haben außerdem den Nachteil, dass einer ihrer beiden Schaltzustände keine merkliche Eigenfärbung aufweist.

Eine Aufgabe der Erfindung ist es, ein optisch detektierbares Sicherungsmerkmal bereitzustellen, bei dem sowohl der Bleich- als auch der Löschvorgang mit Licht im sichtbaren Wellenlängenbereich durchgeführt werden kann. Solcherart ließe sich ein Farbwechsel mit preiswerten und überall verfügbaren Lichtquellen, z.B. Leuchtdioden, induzieren. Selbst mit einfachem Lampenlicht wäre ein Test dann möglich und mit bloßem Auge detektierbar. Weiterhin wäre es erstrebenswert, ein Sicherungsmerkmal bereitzustellen, das eine Anzahl von Schaltzyklen aufweist, die über 10⁴ - 10⁵ liegt.

Eine weitere Aufgabe ist es, eine Vielzahl von einander strukturell ähnlichen, photochromen Materialien bereitzustellen, die sich in ihrer Färbung und/oder ihrem Farbwechsel unterscheiden.

Während die im Stand der Technik bekannten Sicherheitsmerkmale aufgrund des geringen technischen Aufwandes für ihre Überprüfung als Niedrigsicherheitsmerkmale definiert werden können, besteht eine weitere Aufgabe darin, zusätzlich Hochsicherheitsmerkmale bereitzustellen, deren Überprüfung technisch anspruchsvoll ist und damit dem Laien nicht möglich ist.

Der Einsatz von Nukleinsäure-Molekülen, insbesondere DNA-Molekülen, die durch geeignete Amplifikationsreaktionen, wie z.B. der PCR-Reaktion mittels spezifischer Primer, detektiert werden können, als unsichtbares Hochsicherheitsmerkmal wird in WO 9806084 offenbart.

Gemäß der vorliegenden Erfindung ist es gelungen, ein Material, nämlich Bakteriorhodopsin (BR) zu finden, in dem ein Niedrigsicherheitsmerkmal, wie z.B. die Photochromie, mit einem Hochsicherheitsmerkmal, das z. B. die Identifizierung von Einzelchargen erlaubt, kombinierbar ist und dieses Material zur Markierung bzw. Authentisierung von Gegenständen zu nutzen.

Ein erfindungsgemäßes Verfahren zur Sicherung der Authentizität von Gegenständen unter Verwendung einer Bakteriorhodopsin enthaltenden Tinte ist in Anspruch 1 angegeben, wobei bevorzugte Weiterbildungen hierzu in den Unteransprüchen dargelegt sind.

Die oben genannten Aufgaben werden erfindungsgemäß durch ein Verfahren zur Sicherung der Authentizität eines Gegenstandes durch Applizieren einer photochromen Tinte auf den Gegenstand gelöst, wobei man eine photochrome Tinte verwendet, die mindestens eine Bakteriorhodopsin-Variante als photochromen Anteil enthält, welche bei Bestrahlung mit Licht im sichtbaren Wellenlängenbereich eine visuell detektierbare, als Niedrigsicherheitsmerkmal bei einer Authentizitätsprüfung nutzbare reversible Zustandsänderung, insbesondere Farbänderung, erfährt und die zusätzlich zu dem Niedrigsicherheitsmerkmal ein oder mehrere visuell nicht detektierbare Hochsicherheitsmerkmale aufweist, das oder die nur mit instrumenteller Analytik nachweisbar ist bzw. sind.

Gegenstand der vorliegenden Erfindung ist somit die Verwendung einer photochromen Tinte in einem Verfahren zur Sicherung der Authentizität eines Gegenstands. Die erfindungsgemäß zu verwendende Tinte enthält als photochromen Anteil mindestens eine Bakteriorhodopsin-Variante. Eine solche BR-Variante liefert sowohl ein zum Zweck einer Authentizitätsprüfung visuell detektierbares Niedrigsicherheitsmerkmal als auch inhärent ein zusätzliches Hochsicherheitsmerkmal, das nur mittels instrumenteller Analytik nachweisbar ist.

Unter Photochromie versteht man eine durch Licht hervorgerufene reversible Zustandsänderung (insbesondere Farbänderung) eines Stoffes, bei der sich die Farbe (Absorptionsspektrum) des Ausgangsstoffes verändert. Die Rückreaktion kann dann beispielsweise durch Licht anderer Wellenlänge oder durch Wärme ausgelöst werden. Durch die erfindungsgemäße Verwendung einer Bakteriorhodopsin-Variante als photochromen Anteil, welche bei Bestrahlung mit Licht im sichtbaren Wellenlängenbereich eine Zustandsänderung erfährt, ist eine Bestrahlung mit UV-Licht erfindungsgemäß nicht erforderlich. Dadurch können die mit der Benutzung von UV-Licht verbundenen Nachteile, insbesondere die damit verbundenen apparativen Anforderungen und Schutzmaßnahmen weggelassen werden.

Die erfindungsgemäß verwendeten Bakteriorhodopsin-Varianten sind bevorzugt solche, in denen beide, besonders bevorzugt alle Schaltzustände gefärbt sind.

In einem Aspekt umfasst die Erfindung deshalb ein Verfahren zur Sicherung der Authentizität von Gegenständen, wobei eine photochrome Zubereitung in Form einer Tinte enthaltend Bakteriorhodopsin und/oder eine Bakteriorhodopsin-Variante als photochromen Anteil auf den Gegenstand appliziert wird, wobei die Bestrahlung dieser photochromen Zubereitung mit Licht im sichtbaren Wellenlängenbereich zu einer Zustandsänderung, insbesondere zu einer Farbänderung, führt, die zum Zwecke einer Authentizitätsprüfung detektierbar ist. Die detektierbare Zustandsänderung, insbesondere Farbänderung, ist bevorzugt reversibel, wobei die erfindungsgemäß verwendeten Bakteriorhodopsin-Varianten insbesondere eine Schaltzyklenzahl (also eine Farbänderung zu Prüfzwecken) > 10⁵, mehr bevorzugt > 10⁶ und besonders bevorzugt > 10⁷ aufweisen. Dadurch ist eine wiederholte Sicherheitsüberprüfung des authentizitätgesicherten Gegenstandes anhand des Niedrigsicherheitsmerkmals im Rahmen von Routinemaßnahmen möglich. Wenn die Zustandsänderung irreversibel gemacht wird, z.B. durch Zerstörung des photochrom aktiven Teils des Bakteriorhodopsins, kann die Niedrigsicherheitsmarkierung entwertet bzw. ungültig gemacht werden.

Die Authentizitätsprüfung erfolgt bevorzugt durch Bestrahlung der photochromen Tinte mit sichtbarem Licht, um das Bakteriorhodopsin zu bleichen, wobei die photochrome Tinte daraufhin mit Licht eines zweiten Wellenlängenbereichs bestrahlt wird, um das Bakteriorhodopsin photochemisch in den Ausgangszustand zurückzuführen oder es findet eine thermische Relaxation in den ungebleichten Zustand statt. Die Änderung der optischen Eigenschaften beim Bleich- und/oder Löschvorgang kann mit dem bloßen Auge oder einem optischen Messgerät beobachtet werden.

Als Niedrigsicherheitsmerkmal wird ein Merkmal bezeichnet, dessen Anwesenheit bzw. dessen Fehlen von Laien ohne technische Hilfsmittel auf einfache Weise oder mit geringem technischem Aufwand überprüft werden kann.

Als Hochsicherheitsmerkmal wird hingegen ein Merkmal bezeichnet, wenn das Feststellen seiner Anwesenheit bzw. seines Fehlens dem Laien nicht möglich ist und das üblicherweise nur von Spezialisten mit hohem technischem Aufwand überprüft werden kann.

Niedrigsicherheitsmerkmale sind also Merkmale, deren Analyse geringe Finanzmittel (Pfennigbereich) verbraucht und die von jedermann durchgeführt werden kann, während Hochsicherheitsmerkmale solche Merkmale sind, deren Analyse mehrere hunderttausend DM umfassen kann und die in Labors von Spezialisten durchgeführt werden. Niedrigsicherheitsmerkmale bieten Schutz gegen "Jedermann"-Fälschungstechniken, da Photochromie nicht mit bekannten Techniken reproduzierbar ist. Hochsicherheitsmerkmale umfassen die Individualisierung der einzelnen Sicherheitsfarben für Anwendungen oder Anwender bis hinab auf den Level der Chargencodierung.

Beispielsweise stellt die Photochromie der Bakteriorhodopsin-Varianten, also die vom Beobachter leicht feststellbare Farbänderung bei Bestrahlung mit sichtbarem Licht, ein Niedrigsicherheitsmerkmal dar. Weitere visuell detektierbare Niedrigsicherheitsmerkmale sind beispielsweise verschiedene Anfangsfärbungen der Bakteriorhodopsin enthaltenden photochromen Tinten, verschiedene Photozyklen oder/und verändertes kinetisches Verhalten.

Im Gegensatz zu den Niedrigsicherheitsmerkmalen, die von jedermann auf einfache Weise visuell wahrnehmbar sind, können Hochsicherheitsmerkmale nur mit Hilfe von technisch aufwendigen analytischen Apparaten, also mittels instrumenteller Analytik, überprüft werden. Zur Überprüfung von Hochsicherheitsmerkmalen sind also technische Hilfsmittel erforderlich. So führt beispielsweise die Substitution von Aminosäuren in der Bakteriorhodopsin-Sequenz zu Varianten, deren vom Wildtyp abweichende Masse mittels Massenspektrometrie nachgewiesen werden kann. Es besteht aber auch die Möglichkeit durch Ankopplung von Atomen oder/und Molekülen Bakteriorhodopsin-Varianten zu bilden, die beispielsweise aufgrund ihrer unterschiedlichen Masse, ihres Fragmentierungsmusters oder sonstiger unterschiedlicher Eigenschaften, beispielsweise über ESR oder NMR nachgewiesen werden können.

Durch eine Aminosäuresubstitution können insbesondere folgende Hochsicherheitsmerkmale bereitgestellt werden. Bei einer Detektion mit Flüssigkeitschromatographie-Massenspektrometrie/Massenspektrometrie (z.B. ESI) kann eine Änderung der Molekülmasse oder/und eine charakteristische Änderung des Fragmentierungsmusters in der Massenspektroskopie gemessen werden. Durch Detektion mit HPLC und Absorptions- bzw. Fluoreszenzdetektion können charakteristische Änderungen von peptidischen Spaltungen nachgewiesen werden, beispielsweise eine Deletion oder Addition einer Schnittstelle, wodurch sich die Zahl der Fragmente erhöht bzw. vermindert. Mit diesen Methoden kann auch eine Änderung der Zahl der aromatischen Aminosäuren nachgewiesen werden. Die Bindung spezifischer monoklonaler Antikörper an die Bakteriorhodopsinsequenz bzw. Abschnitte davon kann mittels ELISA oder ähnlicher Verfahren nachgewiesen werden.

Beispiele für Hochsicherheitsmerkmale, die durch Ankopplung erhalten werden, sind Spin-Labels, die mittels ESR nachgewiesen werden können sowie Modifikationen, die mittels mit stabilen Isotopen (z.B. ¹³C, ¹⁵N) markierten Proteinmodifizierungsreagentien eingeführt werden.

Die erfindungsgemäß verwendete photochrome Tinte verleiht nun dem zu sichernden Gegenstand sowohl ein Niedrigsicherheitsmerkmal, wie z.B. die Photochromie als auch ein Hochsicherheitsmerkmal, wie z.B. die Sequenzinformation des verwendeten Bakteriorhodopsins, welches z.B. die Identifizierung von Einzelchargen erlaubt.

Durch das erfindungsgemäße Verfahren wird somit eine doppelte Sicherung der gekennzeichneten Gegenstände erhalten. Während Niedrigsicherheitsmerkmale leicht zu erkennen und damit ohne weiteres und schnell nachprüfbar sind, handelt es sich bei den Hochsicherheitsmerkmalen um versteckte Sicherheitsmerkmale, die nur durch aufwendige Analytik festgestellt werden können und von einem potentiellen Nachahmer oder Fälscher möglicherweise gar nicht erkannt werden. Ein potentieller Nachahmer weiß auch zunächst nicht, ob ein bestimmtes Merkmal enthalten sein muss oder nicht, da es eine ganze Reihe von Hochsicherheitsmerkmalen gibt, die mit Bakteriorhodopsin kombiniert werden können.

Diese zusätzliche Sicherung ermöglicht einen hohen Schutz gegenüber Nachahmung und ermöglicht gleichzeitig eine Codierung der Gegenstände, beispielsweise bis hinab zu einer Hersteller- oder Chargen-Codierung. Durch die Verwendung einer Bakteriorhodopsin-Variante sind das Niedrigsicherheitsmerkmal und das Hochsicherheitsmerkmal zudem untrennbar miteinander verbunden, da sie vom gleichen Molekül bereitgestellt werden.

Die Überprüfung der erfindungsgemäß markierten Gegenstände kann dann auf verschiedene Arten durchgeführt werden. Für eine Routineüberprüfung, wie sie beispielsweise bei jedem Eingang von Geldscheinen in einer Bank oder einem Kreditinstitut durchgeführt werden kann, kann beispielsweise mit einfachen Mitteln nur auf das Niedrigsicherheitsmerkmal geprüft werden. Es ist auch möglich, zwei oder mehrere Niedrigsicherheitsmerkmale parallel zu überprüfen. Für eine eingehendere Untersuchung können dann ein oder mehrere Hochsicherheitsmerkmale der Bakteriorhodopsin-Variante(n) überprüft werden. Das Vorliegen von mindestens zwei Hochsicherheitsmerkmalen kann durch die Verwendung von zwei unterschiedlichen Bakteriorhodopsin-Varianten oder durch die Verwendung einer zweifachmodifizierten Bakteriorhodopsin-Variante erhalten werden. Weiterhin ist auch die kombinierte Überprüfung von Niedrigsicherheits- und Hochsicherheitsmerkmalen möglich.

Bakteriorhodopsin ist ein Membranprotein halophiler Bakterien. Aus Mikroorganismen der Gattung Halobacterium kann das Protein Bakteriorhodopsin in großen Mengen gewonnen werden. Das Wildtyp-Bakteriorhodopsin ist dem Fachmann in seinen grundlegenden photochemischen und physikalischen Eigenschaften gut bekannt als photochromes Material, welches, durch Licht aktiviert, eine zyklische Folge von Intermediaten durchläuft. Zur Modellierung der photochromen Eigenschaften wird hierbei ein stark vereinfachter Photozyklus benutzt, der nur noch zwei Zustände enthält, die als B- und M-Zustand bezeichnet werden. Durch Einstrahlung von Licht der Wellenlänge 568 nm wird der purpurfarbene B-Zustand in den gelbfarbenen M-Zustand umgewandelt, der seinerseits durch Absorption von Licht der Wellenlänge 412 nm in den B-Zustand zurückverwandelt wird. Bakteriorhodopsin-Material kann also mit gelb-grünem Licht gebleicht werden, wobei die Purpurfärbung verschwindet und die gelbe Färbung erscheint. Man kann dann abwarten, bis die Purpurfärbung sich durch thermische Relaxation wieder einstellt, oder man benutzt blaues Licht, um das Bakteriorhodopsin-Material photochemisch wiederum in den B-Zustand zurückzuversetzen. Eine Übersicht der genannten Eigenschaften des Bakteriorhodopsins findet sich in N. N. Vsevolodov, Biomolecular Electronics: An Introduction via Photosensitive Proteins, Birkhäuser, Boston, 1998 und in D. Oesterhelt, C. Bräuchle, N. Hampp, Bacteriorhodopsin: A Biological Material for Information Processing, Quarterly Review of Biophysics, 24 (1991) 425 - 478.

Dem Fachmann ist bekannt, dass es eine ganze Reihe von Varianten des Bakteriorhodopsins gibt, die zwar die gleiche Anfangsfärbung aufweisen wie der Wildtyp, sich jedoch in der Kinetik ihres Photozyklusses teilweise erheblich unterscheiden. Ein bevorzugtes Beispiel ist die Variante BR-D96N. Deren Eigenschaften sind in verschiedenen Publikationen beschrieben, z.B. in A. Miller, D. Oesterhelt, Kinetic 0ptimization of Bacteriorhodopsin by Aspartic Acid 96 as an Internal Proton Donor, Biochim. Biophys. Acta 1020 (1990) 57 - 64.

Erfindungsgemäß bevorzugt wird ein Bakteriorhodopsin verwendet, welches vorteilhafterweise mit sichtbarem Licht gebleicht werden kann.

Als vorteilhaft hat sich ein Wellenlängenbereich von 500 bis 600 nm erwiesen. Die Rückführung des Bakteriorhodopsins in den Ausgangszustand kann dann durch thermische Relaxation oder durch Einstrahlung von Licht eines zweiten Wellenlängenbereichs erzielt werden. Für diesen zweiten Wellenlängenbereich werden vorteilhafterweise Wellenlängen im Bereich 400 bis 450 nm verwendet.

Die sichtbare Bleichung des Bakteriorhodopsins unter Bestrahlung ist umso leichter zu detektieren, je höher die Lebensdauer des M-Zustands ist. Typischerweise erreicht man eine Bleichung von etwa 90 % des Bakteriorhodopsin-Materials mit Lichtleistungen kleiner als 100 mW/cm² bei 532 nm.

Bisher sind in der Literatur keine Zubereitungen, wie z.B. Lacke, Tinten oder Druckfarben für die Applikation mittels Drucktechnik und/oder die Anwendung im Bereich Sicherheitstechnik beschrieben, die Bakteriorhodopsin als photochrome Komponente enthalten. Gegenüber den genannten konventionellen photochromen Materialien liefert Bakteriorhodopsin folgende Vorteile:
1. Zum Farbwechsel kann Licht sichtbarer Wellenlänge eingesetzt werden.
2. Beide Schaltzustände weisen eine detektierbare Eigenfärbung auf.
3. Durch Anwendung gentechnischer Methoden lassen sich Bakteriorhodopsin-Funktionsvarianten durch Aminosäureaustausch herstellen. Die so gewonnenen Bakteriorhodopsin-Varianten unterscheiden sich in ihrer Kinetik (BR-D96N) und/oder in ihrer Anfangsabsorption und ihrem Photozyklus (BR-D85N) vom Wildtyp-Bakteriorhodopsin.
4. Die Zahl der möglichen Schaltzyklen liegt höher als 10⁵.

In den Mikroorganismen der Gattung Halobacterium liegt Bakteriorhodopsin in der sogenannten Purpurmembran-Form vor. Herstellung und Isolierung des Bakteriorhodopsins in Purpurmembran-Form ist technisch wohlbekannt (vgl. z.B. EP 0 406 850 B1).

Bakteriorhodopsin wird im Wildtyp in Form eines zweidimensionalen Teils der Zellmembran vorgefunden, der ausschließlich aus Bakteriorhodopsin und Lipiden besteht. Dieser Teil wird Purpurmembran genannt. In dieser Form ist Bakteriorhodopsin thermodynamisch besonders stabil, für ein Protein sogar außergewöhnlich stabil. Dies ist Voraussetzung für eine Vielzahl technischer Anwendungen und auch im Bereich der erfindungsgemäßen Zubereitungen, wo Bakteriorhodopsin als Pigment eingesetzt wird. Deshalb wird erfindungsgemäß BR oder/und eine BR-Variante besonders bevorzugt in der Purpurmembran-Form eingesetzt.

Als Bakteriorhodopsin kann der Wildtyp verwendet werden, erfindungsgemäß bevorzugt enthält die photochrome Tinte aber mindestens eine Bakteriorhodopsin-Variante als photochromen Anteil. Eine Bakteriorhodopsin-Variante unterscheidet sich vom Wildtyp durch mindestens eine Veränderung. Bevorzugt wird die Bakteriorhodopsin-Variante ausgewählt aus Funktionsvarianten, Sequenzvarianten, Derivatisierungsvarianten, Chromophorvarianten, isotopen Varianten oder/und Spin-Label-Varianten.

Bakteriorhodopsin-Sequenzvarianten, die auch Bakteriorhodopsin-Funktionsvarianten sein können, können in Halobacterium salinarum exprimiert werden. Dabei wird das Bakteriorhodopsin in die Zellmembran eingebaut, die dann isoliert werden kann. In einigen Fällen ist das erhaltene Material nicht zweidimensional kristallin, aber das Bakteriorhodopsin membrangebunden.

Bei der Erzeugung von Bakteriorhodopsin-Varianten durch gezielten Austausch einzelner Aminosäuren können durch Austausch von Aminosäuren in für die photochrome Funktion unbedeutenden Bereichen Sequenzvarianten hergestellt werden können. Ein Aminosäureaustausch kann durch ortsgerichtete Mutagenese des für das Bakteriorhodopsin kodierenden Gens durchgeführt werden.

Hierdurch ist aber nun die Erschließung eines Hochsicherheitsmerkmals gegeben, denn der gezielte Aminosäureaustausch im Bakteriorhodopsin-Molekül kann zu Identifizierungszwecken verwendet werden und wird dadurch zum Sicherheitsmerkmal. Bei Austausch von z. B. nur vier Aminosäurepositionen mit den 20 biogenen Aminosäuren können 4²⁰ ≈ 10¹² unterscheidbare Bakteriorhodopsin-Materialien hergestellt werden.

Dadurch ist es ohne großen technischen Aufwand möglich, eine enorme Vielzahl von Bakteriorhodopsin-Molekülen herzustellen, die photochrom funktionell identische Bakteriorhodopsin-Materialien umfassen, sich aber voneinander in eindeutiger Weise, nämlich in ihrer Aminosäuresequenz, unterscheiden.

Das zusätzliche Hochsicherheitsmerkmal kann nicht ohne aufwendige Analytik erkannt werden. Im Stand der Technik beschrieben sind verschiedene Verfahren, mit denen die Zusammensetzung von Bakteriorhodopsin-Materialien mit den genannten Modifikationen noch zuverlässig detektiert werden kann. Allen voran ist hier die Massenspektroskopie zu nennen (vgl. K. L. Schey, D. I. Papac, D. R. Knapp und R. K. Crouch, Matrix-Assisted Laser Desorption Mass Spectrometry of Rhodopsin and Bacteriorhodopsin, Biophys., J. 63 (1992), 1240 - 1243, P. Hufnagel, U. Schweiger, C. Eckerskorn und D. Oesterhelt, Electrospray Ionization Mass Spectrometry of Genetically and Chemically modified Bacteriorhodopsins, Anal. Biochem. 243 (1996) Nr. 1, 46 - 54, L. E. Ball, J. E. Jr. 0atis, K. Dharmasiri, M. Busman, J. Wang, L. B. Cowden, A. Galijatovic, N. Chen, R. K. Crouch and D. R. Knapp, Mass Spectrometric Analysis of Integral Membrane Proteins: Application to Complete mapping of Bacteriorhodopsins and Rhodopsin, Protein Sci. 7 (1998) Nr. 3, 758 - 764). Die bevorzugten Bakteriorhodopsin-Materialien kombinieren ein Niedrigsicherheitsmerkmal, nämlich die optisch leicht zu detektierende Photochromie, mit einem Hochsicherheitsmerkmal, z. B. eine Sequenzvariation in der Aminosäuresequenz des Bakteriorhodopsins selbst.

Zu den von der Erfindung umfassten Niedrigsicherheitsmerkmalen zählen
1. verschiedene Anfangsfärbungen der Bakteriorhodopsin-Materialien,
2. verschiedene Photozyklen,
3. verändertes kinetisches Verhalten.

Das erfindungsgemäße Niedrigsicherheitsmerkmal kann bevorzugt unter Einsatz von Bakteriorhodopsin-Funktionsvarianten erreicht werden, kann aber auch durch andere Bakteriorhodopsin-Varianten, wie etwa Bakteriorhodopsin-Derivatisierungsvarianten und/oder Bakteriorhodopsin-Chromophor-Varianten erreicht werden.

Unter Bakteriorhodopsin-Funktionsvarianten sollen insbesondere Varianten verstanden werden, die sich in ihrem Absorptionsspektrum und/oder ihrem Photozyklus vom Bakteriorhodopsin-Wildtyp unterscheiden.

Eine bekannte Funktionsvariante ist z.B. die Variante D96N, bei der die Asparaginsäure an Position 96 durch Asparagin ausgetauscht ist. Diese Bakteriorhodopsin-Funktionsvariante und einige weitere sind beschrieben bei: "H. Otto, T. Marti, M. Holz, T. Mogi, M. Lindau, H. G. Khorana und M. P. Heyn, Proc. Natl. Acad. Sci. U. S. A. 86 (1989), S. 9228-9232" und "T. E. Thorgeirsson, S. J. Milder, L. J. W. Miercke, M. C. Betlach, R. F. Shand, R. M. Stroud und D. S. Kliger, Biochemistry 30 (1991), S. 9133-9142".

Unter Bakteriorhodopsin-Derivatisierungsvarianten sollen insbesondere Bakteriorhodopsin-Varianten verstanden werden, die sich vom Wildtyp durch die kovalente Ankopplung von Molekülen unterscheiden. Solche Moleküle können beispielsweise die Aufgabe haben, das Molekulargewicht von Bakteriorhodopsin zu vergrößern, um in der Massenspektroskopie ein derartiges Molekül identifizieren zu können oder ein farbiges Molekül sein, um so das Absorptionsspektrum des Bakteriorhodopsins zu verändern, oder ein fluoreszierendes Molekül sein, um so eine an das Bakteriorhodopsin-gekoppelte Fluoreszenz beobachten zu können. Ebenso kann das Bakteriorhodopsin-Material auch an ein Polymer kovalent gekoppelt sein. Die Kopplungsreaktion kann z.B. nach Chignell & Chignell, Biophys. Biochem. Res. Commun. 62 (1975), S. 136-143 und nach Renthal et al., Biochemistry 22 (1983), S. 5-12 durchgeführt werden.

Der anfängliche Farbeindruck des Bakteriorhodopsin-Materials bzw. der photochromen Tinte sowie der Farbeindruck des gebleichten Zustandes können durch kovalente Ankopplung geeigneter Farbstoffe an die Bakteriorhodopsin-Moleküle oder/und einfaches Zumischen von passiven Farbstoffen oder Pigmenten stark beeinflusst werden. Der visuelle Eindruck der entstehenden Farbmischungen lässt sich im CIE-Diagramm leicht anschaulich visualisieren. Der Fachmann kann die Farbwirkung mit bekannten Methoden solcher Art bestimmen.

Es können Linkermoleküle an das Bakteriorhodopsin gekoppelt werden, die es erlauben, an diese wiederum weitere Verbindungen anzukoppeln. Moleküle, die zu den erfindungsgemäßen Aufgaben angekoppelt werden können, dienen dazu, das Molekulargewicht von Bakteriorhodopsin zu vergrößern, um in der Massenspektroskopie ein derartiges Molekül identifizieren zu können.

Unter Bakteriorhodopsin-Chromophor-Varianten sollen insbesondere Bakteriorhodopsin-Varianten verstanden werden, die sich vom Wildtyp durch die Entfernung bzw. den Austausch der chromophoren Retinyliden-Gruppe durch ein anderes Molekül, insbesondere durch sogenannte Retinal-analoge Moleküle, unterscheidet. Das Retinal-analoge Molekül kann kovalent über Lysin-216 an Bakteriorhodopsin gebunden sein.

Somit sind weitere Möglichkeiten zur Herstellung von Bakteriorhodopsin-Varianten durch Ersetzen der chromophoren Retinyliden-Gruppe möglich. Hierbei wird eine Modifikation der photophysikalischen Eigenschaften erreicht, wobei bevorzugt Dihydroretinal oder 4-Ketoretinal zum Einsatz kommen können.

Unter Bakteriorhodopsin-lsotopenvarianten sollen insbesondere solche Bakteriorhodopsin-Varianten verstanden werden, bei denen einige oder alle Aminosäuren teilweise oder vollständig mit ¹³C oder ¹⁵N markiert sind. Dies kann dadurch erreicht werden, dass einige markierte Aminosäuren dem Wachstumsmedium zugesetzt werden oder Pepton eingesetzt wird, das als Ganzes markiert wird. Mittels hochauflösender NMR können die so markierten Verbindungen identifiziert werden.

Unter Bakteriorhodopsin-Spin-Label-Varianten sollen insbesondere solche Bakteriorhodopsin-Varianten verstanden werden, die ein Spin-Label kovalent an das Bakteriorhodopsin-Molekül gebunden enthalten. Dies kann z. B. dadurch erreicht werden, dass ein Derivat von TEMPO (2,2,6,6-Tetramethylpiperidin-N-oxyl) oder DOXYL (4,4-Dimethyloxazolidin-N-oxyl) oder PROXYL (2,2,5,5-Tetramethylpyrrolidin-N-oxyl) kovalent an das Bakteriorhodopsin-Material gekoppelt wird. Mittels ESR kann die Anwesenheit und Art des Spin-Labels geprüft werden.

Unter Bakteriorhodopsin-Sequenzvarianten sollen insbesondere solche Bakteriorhodopsin-Varianten verstanden werden, die sich vom Wildtyp durch den Verlust oder den Austausch oder die Hinzufügung einer oder mehrerer Aminosäuren unterscheiden, die aber nicht zu einer wesentlichen Beeinflussung des Photozyklus führen. Sequenzvarianten von Bakteriorhodopsin sind z. B. D36C oder Varianten, bei denen am N-Terminus oder C-Terminus Aminosäuren angehängt werden.

Die Kombination der Modifikationen der oben genannten Varianten führt zu neuen, bevorzugten Varianten, wodurch eine enorme Vielzahl an verschiedenen Bakteriorhodopsin-Zubereitungen möglich wird. Dadurch wird ein Hochsicherheitsmerkmal erhalten, da der Aufwand für die Analyse sehr hoch wird und gleichzeitig jede einzelne Charge aufgrund der großen Vielfalt eindeutig identifiziert werden kann.

Die Bakteriorhodopsin-Variante wird bevorzugt ausgewählt aus D36X, D96X und D85X, worin X für eine der natürlich vorkommenden Aminosäuren steht. Besonders bevorzugt wird die BR-Variante ausgewählt aus D36C, D96N und D85N.

Besonders bevorzugt werden Mutanten verwendet, die eine gesteigerte Lichtempfindlichkeit aufweisen und insbesondere Materialien, wie sie auch für die Holographie eingesetzt werden.

Die Bakteriorhodopsin-Zubereitung kann weiterhin neben Bakteriorhodopsin ein herkömmliches, nicht photochromes Pigment, oder/und ein Fluorochrom oder/und ein an Bakteriorhodopsin kovalent gebundenes Pigment oder/und ein weiteres photochromes Pigment enthalten. Durch die Mischung mit Bakteriorhodopsin kann das nichtphotochrome Pigment oder Fluorochrom innerhalb der Sicherheitsmarkierung verborgen sein. Bei einer solchen Ausführungsform kann es weiterhin zweckmäßig sein, zusätzlich zum sichtbaren Licht UV-Licht zu verwenden.

Des Weiteren lassen sich fluoreszierende oder phosphoreszierende Moleküle an die Bakteriorhodopsin-Moleküle koppeln, wodurch deren Emission ein zusätzliches Merkmal darstellt. Durch geeignete Wahl der Lage der Emission kann eine Unterdrückung der Fluoreszenz erzielt werden, wenn sich das Bakteriorhodopsin-Material im ungebleichten Zustand befindet. Dies wird erreicht, wenn die Lage der anfänglichen Bakteriorhodopsin-Absorption und der Emission des fluoreszierenden oder phosphoreszierenden Materials stark überlappt. In diesem Fall absorbiert das Bakteriorhodopsin-Material die emittierten Photonen und mit bloßem Auge ist dann keine Fluoreszenz wahrnehmbar. Die Fluoreszenz wird erst dann sichtbar, wenn das Bakteriorhodopsin-Material photochemisch gebleicht wird.

Die Prüfung der Zusammensetzung des applizierten Bakteriorhodopsin-Materials kann z.B. durchgeführt werden, indem mittels mikroanalytischer Sequenzierung die Aminosäuresequenz des Bakteriorhodopsin-Materials ganz oder teilweise bestimmt wird oder indem mittels immunologischer Verfahren die Reaktion mit einem spezifischen Antikörper gemessen wird.

Bakteriorhodopsin-Materialien, die Hochsicherheitsmerkmale umfassen, enthalten vorzugsweise Bakteriorhodopsin-Varianten
1. mit gezielt veränderten Aminosäuresequenzen, wobei die Sequenzänderung nicht die photophysikalischen Eigenschaften beeinflusst,
2. mit kovalent angekoppelten Molekülen und
3. mit Aminosäuren, die mit ¹³C und/oder ¹⁵N und/oder anderen Isotopen markiert sind.

Besonders bevorzugt sind Kombinationen aus zwei oder mehr der obigen Bakteriorhodopsin-Variantentypen.

Besonders bevorzugt wird in dem erfindungsgemäßen Verfahren mindestens eine Bakteriorhodopsin-Variante verwendet mit den Merkmalen:
a) der zur Ausbildung der Purpurmembran-Form des Proteins notwendige Bereich ist gegenüber dem Bakteriorhodopsin-Wildtyp unverändert und
b) in Schleifen oder/und dem C-Terminus oder/und dem N-Terminus der Polypeptidkette ist mindestens ein Aminosäure-Austausch gegenüber dem Bakteriorhodopsin-Wildtyp vorhanden, umfassend Deletionen, Additionen, Insertionen oder/und Substitutionen, wobei diese Aminosäure-Austausche nicht zur einer Änderung der durch den photochromen Bereich bestimmten photochromen Eigenschaften des Bakteriorhodopsins führen.

Solche Bakteriorhodopsine sind in dem zur Ausbildung der Purpurmembran-Form des Proteins notwendigen Bereich gegenüber dem Bakteriorhodopsin-Wildtyp unverändert. Ausreichend für die Zwecke dieser Erfindung ist es auch, wenn das Bakteriorhodopsin trotz geringfügiger Änderungen in diesem Bereich weiterhin zur Ausbildung einer Purpurmembran fähig ist.

Die erfindungsgemäßen Änderungen in der Aminosäuresequenz umfassen Aminosäureaustausche, wie z. B. Deletion, Insertion, Substitution und/oder Addition an beliebigen Positionen innerhalb der gesamten Polypeptidkette. Besonders bevorzugt sind Additionen von Aminosäuren an den N- oder/und C-Termini oder/und den insbesondere außerhalb der Membran liegenden Schleifen der Polypeptidkette. Die erfindungsgemäß durchgeführten Änderungen zur Codierung des Hochsicherheitsmerkmals werden somit bevorzugt nicht in dem Bereich des Bakteriorhodopsins durchgeführt, der die photochromen Eigenschaften beeinflusst. Der Aminosäureaustausch in den Schleifen und/oder dem C-Terminus oder/und dem N-Terminus der Polypeptidkette führt bei geeigneter Durchführung nicht zu einer Änderung der photochromen Eigenschaften des Ausgangs-Bakteriorhodopsins. An dieser Stelle soll festgehalten werden, dass als Ausgangs-Bakteriorhodopsin sowohl ein Bakteriorhodopsin des Wildtyps als auch ein bereits modifiziertes Bakteriorhodopsin, insbesondere BR-D96N, verwendet werden kann.

Die zur Analyse einsetzbaren Aminosäureaustausche bewirken bevorzugt Massenänderungen des Bakteriorhodopsin-Moleküls von mindestens einem Dalton, noch bevorzugter mindestens 10 Dalton, und am meisten bevorzugt mehr als 100 Dalton. Zur Analyse werden Geräte und Ionisationsverfahren des Standes der Technik, wie z. B. FTMS (Fourier Transform Massenspektrometer) und/oder TOF (Flugzeitmassenspektrometer) und/oder MALDI (Matrix-assisted Laser Desorption Ionisation) und/oder ESI (Elektrosprayionisation) eingesetzt.

Die Addition/Insertion von Aminosäuren kann insbesondere bis zu 1000 zusätzliche Aminosäuren umfassen, bevorzugt bis zu 100 Aminosäuren, besonders bevorzugt bis zu 50 Aminosäuren, und mindestens eine, am meisten bevorzugt 3 bis 20 Aminosäuren. Eine Addition von mindestens 6 Histidin-Resten am C-Terminus kann genutzt werden, um die Anwesenheit der Bakteriorhodopsin-Variante über die Bindung von Metallen mittels XRF oder TXRF zu detektieren.

Die Deletion oder Substitution betrifft insbesondere 1 bis 10 und besonders bevorzugt 1 bis 4 Aminosäuren.

Als Substitutionsvariante bevorzugt eingesetzt wird die Bakteriorhodopsin-Variante, deren Asparaginsäurerest in Position 36 durch einen Cysteinrest ersetzt ist (BR-Variante D36C).

Die Molekulargewichte der Aminosäuresequenzvarianten der Bakteriorhodopsin-Moleküle lassen sich durch Massenspektroskopie mit ESI oder MALDI-TOF bestimmen. Nach Rückrechnung der Massenspektren erhält man die Molmassen der untersuchten Substanzen mit einer Auflösung von bis zu einer Massenzahl. Bei der Änderung der Aminosäuresequenz, z.B. auch durch Deletion oder Insertion, kommt es zu vergleichsweise großen Massenzahländerungen, die analytisch gut detektierbar sind. Selbst wenn nur einige wenige Aminosäuren durch andere Aminosäuren ersetzt werden, sind die resultierenden Massenänderungen analytisch ausreichend.

Bevorzugt wird eine Bakteriorhodopsin-Variante verwendet, bei der am C-Terminus mindestens eine Aminosäure addiert ist. Weiterhin ist es bevorzugt, Bakteriorhodopsin-Varianten zu verwenden, die mindestens ein Cystein enthalten. In einer weiteren bevorzugten Ausführungsform wird mindestens eine Bakteriorhodopsin-Variante eingesetzt, welche einen vom Wildtyp verschiedenen Photozyklus oder/und eine vom Wildtyp verschiedene Anfangsfarbe besitzt.

Am meisten bevorzugt werden Bakteriorhodopsin-Varianten eingesetzt, die eine verminderte Licht-Dunkel-Adaption aubweisen. Bakteriorhodopsin, das seine maximale Absorption bei 570 nm hat (B-Zustand), relaxiert im Dunkeln langsam mit einer Halbwertszeit von etwa 10 bis 20 Minuten teilweise in einen Zustand mit maximaler Absorption bei 548 nm, den sog. D-Zustand. Beim Bakteriorhodopsin-Wildtyp stellt sich im Dunkeln ein Gleichgewicht von etwa 50 : 50 B-Zustand zu D-Zustand ein. Der B-Zustand weist all-trans, der D-Zustand 13-cis-Konfiguration des Retinals auf. Unter Belichtung wird Bakteriorhodopsin zunächst zu 100% in den B-Zustand überführt, von wo aus der Photozyklus beginnt, in dessen Verlauf die gewünschte starke Farbänderung auftritt (Absorptionsverschiebung nach 412 nm).

Ist nun eine erfindungsgemäße Bakteriorhodopsin enthaltende photochrome Tinte bzw. der damit markierte Gegenstand über längere Zeit im Dunkeln aufbewahrt worden, so ist das Bakteriorhodopsin in seinen sog. Dunkel-adaptierten Zustand übergegangen. Wird nun die zu prüfende Fläche erstmals mit Licht bestrahlt, um das Bakteriorhodopsin zu bleichen, so scheint sie eine verminderte Lichtempfindlichkeit bzw. eine reduzierte Ausbleichgeschwindigkeit aufzuweisen. Dies wird dadurch verursacht, dass ein Teil des eingestrahlten Lichts verbraucht wird, um Bakteriorhodopsin aus dem D-Zustand in den B-Zustand zu überführen. Wird die einmal herbeigeführte Bleichung wieder umgekehrt, z.B. mit blauem Licht, d.h. wird der lila-farbene Anfangszustand wiederhergestellt, so zeigt bei unmittelbar darauf folgenden weiteren Belichtungen das Material die gewünschte hohe Lichtempfindlichkeit. Wünschenswert ist aber, dass die photochromen Eigenschaften auch nach Lagerung im Dunkeln bereits im ersten Zyklus auftreten. Deshalb sind Bakteriorhodopsin-Varianten mit verminderter oder völlig abwesender Licht-Dunkel-Adaption bevorzugte Materialien für die erfindungsgemäßen Verwendungen.

Bakteriorhodopsin-Varianten, die eine verminderte oder abwesende Licht-Dunkel-Adaption aufweisen, können durch die Verwendung von Retinal-Analoga bzw. durch Bakteriorhodopsin-Varianten mit veränderter Aminosäuresequenz erhalten werden. Besonders geeignete Beispiele sind Bakteriorhodopsine mit einem chemisch modifizierten Chromophor, wie etwa 13-Demethyl-11,14-epoxy-Bakteriorhodopsin (M. Muradin-Szweykowska et al., Rec.: J.R. Neth. Chem. Soc. 102 (1983), 42-46. Weitere bevorzugte Varianten sind Bakteriorhodopsine, die ein 13-substituiertes Retinal enthalten, insbesondere ein Retinal, welches an Position 13 ein H-Atom, eine Ethyl- oder eine Propylgruppe trägt (W. Gaertner et al., Biochemistry 27 (1988), 3497-3502. Arg-82-, Asp-85- und Asp-212-Mutanten mit verminderter Lichtadaption, die hierin ebenfalls bevorzugt verwendet werden, sind beispielsweise bei M.P. Krebs et al., Proc. Natl. Acad. Sci. USA 90 (1993), 1987-1991, beschrieben. Weitere bevorzugte Mutanten sind Y185F (P. Rath et al, Biochemistry 32 (1993), 2272-2281) sowie die bei S.P. Balashow et al., Biochemistry 32 (1993), 10331, 10343, sowie bei K. Ihara et al., Biophys. J. 67 (1994), 1187, 1191, beschriebenen Mutanten, insbesondere Arg-82-Ala sowie Met-145. Allgemein sind Varianten bevorzugt, die auch im Dunkeln im B-Zustand verbleiben und nicht in den D-Zustand übergehen.

An Bakteriorhodopsin-Moleküle kovalent angekoppelte Moleküle bieten eine weitere Option von Hochsicherheitsmerkmalen. Durch die Kopplung von Molekülen wird eine weitere Analysedimension ermöglicht, beispielsweise über den Nachweis bestimmter Eigenschaften der angekoppelten Moleküle oder über deren Masse. Angekoppelte Moleküle können z.B. Biotin und/oder Avidin oder/und Digoxygenin sein. Außerdem kann man Moleküle ankoppeln, die massenspektroskopisch separat nachgewiesen werden können. Die Ankoppelung von Spin-Label-Molekülen, wie z.B. TEMPO, DOXYL oder PROXYL, kann in einer ESR-Analyse, die auch mit Einschränkungen unter Einsatz eines Feststoffs durchgeführt werden kann, ermittelt werden. Mit den stabilen Isotopen ¹³C und ¹⁵N markierte Aminosäuren können durch NMR-Analyse detektiert werden. (M. Engelhard, B. Hess, G. Metz, W. Kreutz, F. Siebert, J. Soppa und D. Oesterhelt, High resolution carbon-13-solid state NMR of bacteriorhodopsin: assignment of specific aspartic acids and structural implications of single site mutations, Eur. Biophys. J. 18 (1990), 17-24).

Hochsicherheitsmerkmale zur Authentizitätsprüfung können überraschenderweise auch durch Verwendung von polymeren Molekülen, deren Monomerensequenz bekannt ist und die gegebenenfalls an Bakteriorhodopsinmoleküle angekoppelt sind, erhalten werden. Als polymere Moleküle können dabei z.B. Oligopeptide, Polypeptide, Proteine, Nukleinsäuren, peptidische Nukleinsäuren (PNAs) oder auch synthetische, nicht in der Natur vorkommende Polymere eingesetzt werden. Die Polypeptide und Proteine können dabei Nicht-Proteinanteile, die Nukleinsäuren Nicht-Nukleinsäure-Anteile enthalten. Die Nicht-Proteinanteile und die Nicht-Nukleinsäure-Anteile können z. B. Glykosidanteile, Biotin oder/und Digoxygenin oder/und Avidin umfassen.

Es ist also auch möglich, zusätzlich zum BR der Tinte ein oder mehrere weitere Polymere zuzumischen, welche als informationstragende Bestandteile weitere Hochsicherheitsmerkmale liefern oder z.B. lediglich zur Einstellung der Viskosität oder anderer mechanischer Eigenschaften der Markierung dienen.

Die an Bakteriorhodopsin als Hochsicherheitsmerkmal angekoppelten polymeren Moleküle, wie z.B. DNA- oder/und RNA- oder/und PNA-Moleküle oder/und Hybride aus den genannten Molekülsorten können z.B. durch geeignete Amplifikationsreaktionen, wie der PCR-Reaktion mittels spezifischer Primer, detektiert werden. Die Detektion kann hierbei die gelelektrophoretische Größenanalyse aber auch die direkte Nukleinsäurebasensequenzbestimmung umfassen. Polypeptide können in ähnlicher Weise durch mikroanalytische Sequenzbestimmung analysiert und detektiert werden. Aufgrund der Möglichkeiten, die die organische Synthese von Nukleinsäuren und Polypeptiden bietet, können auch nicht in der Natur vorkommende Sequenzen zum Einsatz kommen.

Die Kombination von Niedrigsicherheitsmerkmalen und Hochsicherheitsmerkmalen bietet interessante Vorteile. Eine solche Kombination kann beispielsweise dadurch erhalten werden, dass die photochrome Eigenschaft von Bakteriorhodopsin als Niedrigsicherheitsmerkmal mit einem der oben genannten Hochsicherheitsmerkmalen kombiniert wird. Besonders vorteilhaft ist es, hierzu Bakteriorhodopsin gemeinsam mit einem polymeren Molekül zu verwenden. Das Bakteriorhodopsin bzw. eine Bakteriorhodopsin-Variante kann aber auch selbst als analysierbares polymeres Molekül verwendet werden. Trotz enormer Variabilität sind die Sicherheitsmerkmale untrennbar miteinander verbunden. Daneben ist es möglich, zusätzlich zum Bakteriorhodopsin als photochromem Material davon verschiedene Polymere an BR gekoppelt oder/und in freier Form zu verwenden.

Das erfindungsgemäße Verfahren zur Sicherung der Authentizität von Gegenständen umfasst die Applikation einer photochromen Zubereitung in Form einer Tinte oder Druckfarbe auf dem jeweiligen Gegenstand. Die erfindungsgemäße photochrome Zubereitung enthält dabei neben Bakteriorhodopsin der Wildtypform oder/und mindestens einer Bakteriorhodopsin-Variante als photochromen Anteil gegebenenfalls geeignete Hilfsstoffe und/oder geeignete Matrixmaterialien.

Die Hilfsstoffe werden eingesetzt für den Applikationsprozess: Zur Vermeidung der Schaumbildung und zur Verbesserung der Benutzungseigenschaften oder/und für die Stabilität: Zur Mikroverkapselung der Zubereitungsmaterialien und zur Abschirmung von UV-Strahlen oder/und für die Verbesserung des visuellen optischen Eindrucks: Zur Beeinflussung des Absorptionsspektrums, z.B. im ungebleichten und gebleichten Zustand von Bakteriorhodopsin-Material. Beispiele für solche Hilfsstoffe sind passive Farbstoffe oder Pigmente, die der Tinte einfach zugemischt werden, um eine gewünschte Anfangs- bzw. Endfärbung zu erzielen. Auf diese Weise können auch Mischfarben gebildet oder/und das Spektrum verschoben werden.

Geeignete Matrixmaterialien werden eingesetzt zur Fixierung des Zubereitungsmaterials durch physikalischen Einschluss oder/und kovalente Koppelung an das Matrixmaterial oder/und nachträgliche Quervernetzung des Zubereitungsmaterials bzw. des Matrixmaterials mittels chemischer oder photochemischer Methoden. Die Quervernetzung kann dabei eine Behandlung mit Glutaraldehyd, Transglutaminase, (radikalische) Polymerisation oder/und eine photochemische Quervernetzung umfassen.

Die Applikation der erfindungsgemäßen photochromen Zubereitung kann mittels bekannter drucktechnischer Verfahren erfolgen, wie z.B. Offset-, Sieb-, Inkjet-, oder Tampondruck durch mechanischen Auftrag mittels Pinsel, durch Sprühen, Tauchen oder Elektrophorese. Das erfindungsgemäße Bakteriorhodopsin-Material kann durch anschließende Trocknung verfestigt und das synthetische oder biologische Matrixmaterial durch eine Nachbehandlung unlöslich gemacht werden. Appliziert werden kann die Zubereitung selbst oder ein Hilfssubstrat auf dem die Zubereitung aufgebracht ist. Die Bakteriorhodopsin-Zubereitung kann in mikroverkapselter Form vorliegen. Mikroverkapselte Farbzubereitungen sind für Druckverfahren besonders geeignet.

In einer besonders bevorzugten Ausführungsform des.erfindungsgemäßen Verfahrens wird zur Markierung eines Gegenstandes unter Verwendung der photochromen Tinte die photochrome Tinte auf den Gegenstand aufgebracht, anschließend durch Trocknung verfestigt und mittels eines Matrixmaterials fixiert, wobei durch Belichtung ein Farbwechsel der photochromen Zubereitung herbeiführbar ist. Die zum Farbwechsel benötigte Mindestlichtenergie kann bevorzugt über dem pH-Wert der photochromen Zubereitung eingestellt werden.

Weiterhin ist es bevorzugt auf einen zu markierenden Gegenstand zwei Flächen A und B zu applizieren, welche insbesondere aneinandergrenzen, wobei die erste Fläche A mit der eine Bakteriorhodopsin-Variante enthaltenden Tinte markiert wird und das zweite Feld B mit einem nicht photochromen Farbstoff versehen wird, dessen spektrale Remission sich im unbelichteten Zustand nicht von der des ersten Feldes unterscheidet, aber nach der Belichtung eine gegenüber dem ersten Feld unterschiedliche Remission zeigt. Weiterhin ist es auch möglich, auf den zu markierenden Gegenstand zwei insbesondere aneinandergrenzende Flächen A und B zu applizieren, wobei das erste Feld mit einer ersten Bakteriorhodopsin enthaltenden photochromen Zubereitung markiert wird, und das zweite Feld mit einer zweiten photochromen Zubereitung versehen wird, deren Lichtempfindlichkeit sich von der der ersten unterscheidet, so dass sich das zweite Feld im unbelichteten Zustand in seiner spektralen Remission nicht von dem ersten Feld unterscheidet, aber nach der Belichtung eine gegenüber dem ersten Feld unterschiedliche Remission zeigt. Die zweite photochrome Zubereitung enthält bevorzugt Bakteriorhodopsin-Wildtyp oder/und eine Bakteriorhodopsin-Variante, die von der in der ersten Zubereitung verwendeten BR-Variante verschieden ist und dient insbesondere als Referenzfarbe.

Ein weiterer Gegenstand der Erfindung ist eine photochrome Tinte, welche mindestens eine, bevorzugt mindestens zwei Bakteriorhodopsin-Varianten enthält. Die bevorzugten Bakteriorhodopsin-Varianten sind wie oben beschrieben, wobei eine solche photochrome Tinte insbesondere zur Markierung von Gegenständen zur Sicherung der Authentizität geeignet ist.

Die erfindungsgemäße Tinte kann mit dem Fachmann bekannten herkömmlichen Farbstoffen, wie etwa Fluorochrom, Pigmenten oder/und weiteren photochromen Pigmenten, in Kombination verwendet werden. Die Bakteriorhodopsin-Materialien enthaltende Tinte nach der Erfindung kann wie herkömmliche Tinte verwendet werden und ist außer zur Sicherung der Authentizität von Gegenständen z.B. auch zur Dekoration und für sonstige Spezialeffekte einsetzbar.

Unter Tinte wird hier auch jede gefärbte Schreibflüssigkeit/Druckflüssigkeit und ggf. pulverisiertes Applikationsmedium verstanden. Unter den Begriff Tinte fallen auch Druckfarben und andere Farbzusammensetzungen, die zum Bedrucken von Gegenständen eingesetzt werden können oder die allgemein Verwendung bei der Erzeugung von Drucken finden. Bei Verwendung der Bakteriorhodopsin-Materialien als Tinte können als Lösungsmittel Wasser oder andere Lösungsmittel, wie z. B. solche auf Alkoholbasis, verwendet werden. Bevorzugt umfasst die Tinte mindestens zwei BR-Varianten. Durch die Verwendung von mindestens zwei Bakteriorhodopsin-Varianten bzw. einer Bakteriorhodopsin-Variante, welche mindestens zwei Modifikationen aufweist, ergeben sich für eine Analyse vorteilhafte Effekte, dadurch dass die Analyse zweidimensional durchführbar ist. Neben der bevorzugten Purpurmembranform des Bakteriorhodopsins kann die erfindungsgemäße Tinte zusätzlich Bakteriorhodopsin in solubilisierter Form enthalten.

Bakteriorhodopsin in solubilisierter Form lässt sich gewinnen, indem das Bacteriorhodopsin-Gen in einem Wirt wie z.B. E. coli exprimiert wird und mit zugesetztem Retinalaldehyd rekonstituiert wird. Eine weitere Möglichkeit ist, dass Bakteriorhodopsin aus Purpurmembran durch Entfernen der Lipide gewonnen wird. Dazu wird beispielsweise eine Purpurmembran-Suspension (OD₅₇₀<5) in Wasser oder Puffer mit 1% Triton-X 100 versetzt und 1 h mit einer Mikrosonde eines Sonifiers kontinuierlich beschallt. Der nach dem Abzentrifugieren erhaltene Überstand enthält Bakteriorhodopsin in solubilisierter Form.

Die BR-enthaltende photochrome Zubereitung kann auf jeden beliebigen Gegenstand appliziert werden. Gegenstände von besonderem Interesse sind z.B. Dokumente, Wertpapiere, Banknoten, Kunstwerke, Ausweise, Kleidungsstücke, Kraftfahrzeuge, Prüfzeichen, Qualitätssiegel, etc.

Eine weitere Ausführungsform der Erfindung ist somit ein Gegenstand mit einer Markierung, welche mindestens eine Bakteriorhodopsin-Variante enthält. Diese Markierung wird vorzugsweise mit dem erfindungsgemäßen Verfahren hergestellt. Die Markierung enthält vorzugsweise eine photochrome Tinte wie oben beschrieben.

Wie oben bereits ausgeführt, hat Bakteriorhodopsin-Wildtyp eine geringe Lichtempfindlichkeit, so dass es mit normal intensiven Lichtquellen, zum Beispiel Sonnenlicht, praktisch nicht möglich ist, eine mit dem bloßen Auge gut detektierbare Bleichung herbeizuführen. Diese geringe Lichtempfindlichkeit resultiert aus einer geringen Lebensdauer des M-Zustandes.

Allerdings kann die Lebensdauer des M-Zustands von Bakteriorhodopsin-Wildtyp durch geeignete Maßnahmen verlängert werden. Ein weiterer Gegenstand der Erfindung ist deshalb ein Verfahren zur Sicherung der Authentizität eines Gegenstandes durch Applizieren einer photochromen Tinte auf den Gegenstand, wobei man eine photochrome Tinte verwendet, die Bakteriorhodopsin-Wildtyp als photochromen Anteil enthält, welcher bei Bestrahlung mit Licht im sichtbaren Wellenlängenbereich eine visuell detektierbare, als Niedrigsicherheitsmerkmal bei einer Authentizitätsprüfung nutzbare, reversible Zustandsänderung erfährt und die weiterhin einen Hilfsstoff enthält, welcher Wasser bindet oder/und die Protonenverfügbarkeit reduziert. Durch Hilfsstoffe, welche die niedrige Lichtempfindlichkeit des Bakteriorhodopsin-Wildtyps erhöhen, kann auch Bakteriorhodopsin-Wildtyp in Verfahren zur Sicherung der Authentizität eingesetzt werden. Solche Hilfsstoffe, die als Zusatz zur Tinte verwendet werden, dienen dazu, die Lebensdauer des M-Zustandes von Bakteriorhodopsin-Wildtyp zu steigern. Die Lebensdauer des M-Zustandes von Bakteriorhodopsin-Wildtyp steigt bei nahezu vollständiger Entfernung von Wasser an. Die Hilfsstoffe haben somit im Wesentlichen den Zweck, Wasser zu binden bzw. die Protonenverfügbarkeit zu reduzieren. Geeignete Hilfsstoffe sind beispielsweise Verbindungen, die primäre oder sekundäre Aminogruppen enthalten. Besonders bevorzugt werden als Hilfsstoffe Arginin oder Guanidinium x HCI eingesetzt. Diese Hilfsstoffe können auch bei Bakteriorhodopsin-Varianten zur Erhöhung der Lichtempfindlichkeit verwendet werden.

In dem erfindungsgemäßen Verfahren zur Sicherung der Authentizität eines Gegenstandes enthält die verwendete photochrome Tinte somit bevorzugt eine BR-Variante bzw. BR-Mutante, wobei die Mutation zur Nutzung als Information für ein Hochsicherheitsmerkmal und/oder zur Steigerung der Lichtempfindlichkeit dient. Besonders bevorzugt werden Varianten verwendet, die mindestens zwei Modifikationen enthalten, nämlich eine Modifikation zur Steigerung der Lichtempfindlichkeit des Bakteriorhodopsins und eine weitere, welche mit bekannten Verfahren als Hochsicherheitsmerkmal detektiert werden kann.

Die Verwendung des Wildtyp-Bakteriorhodopsins alleine ist aufgrund der geringen Lichtempfindlichkeit (Wildtyp-Bakteriorhodopsin ändert bei üblichen Beleuchtungsstärken seine Farbe nicht in erkennbarem Maße) nur bedingt geeignet und aufgrund der allgemeinen Verfügbarkeit von Wildtyp-Baktriorhodopsin auch für eine Authentizitätssicherung nur von relativ geringem Interesse. Durch die Verwendung einer Kombination von Bakteriorhodopsin-Wildtyp und einem der oben beschriebenen Zusätze zur Steigerung der Lichtempfindlichkeit können jedoch interessante Anwendungen erschlossen werden. In einer weiteren bevorzugten Ausführungsform werden die oben beschriebenen Zusätze zur Steigerung der Lichtempfindlichkeit bzw. andere Zusätze, etwa zur Einstellung der Anfangsfärbung, Markierungen etc. zusammen mit einer oder mehreren Bakteriorhodopsin-Varianten oder Bakteriorhodopsin-Mutanten verwendet.

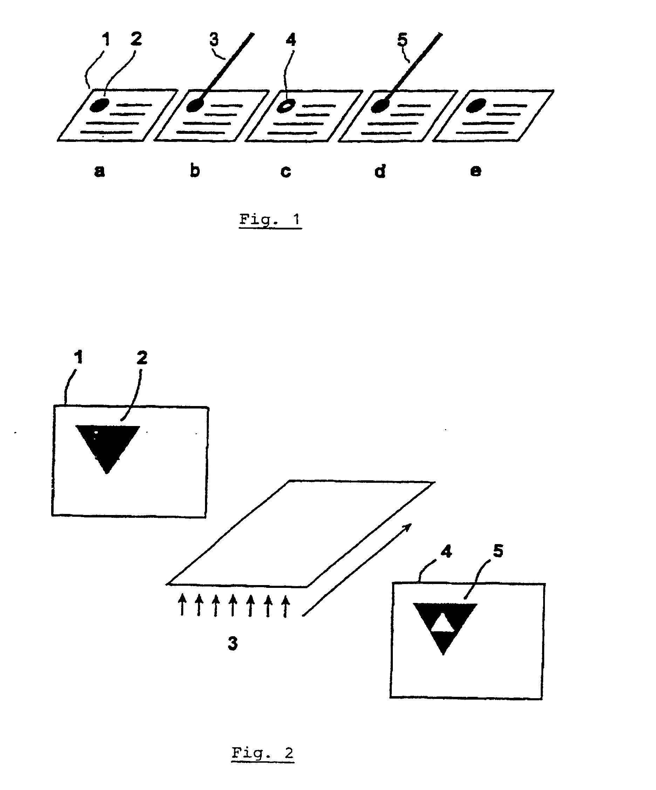

Die Erfindung wird durch die folgenden Beispiele in Verbindung mit den Abbildungen 1 und 2 näher erläutert.

Abbildung 1 zeigt den Ablauf eines Verfahrens zur Authentizitätsprüfung.

Abbildung 2 zeigt einen Kopiervorgang unter Verwendung eines Sicherheitsmerkmals.

### Beispiel 1: Niedrigsicherheitsmerkmal-Prüfung

Für den Anwender leicht zu prüfen sind die photochromen Eigenschaften von Bakteriorhodopsin bzw. BR-Varianten (Abbildung 1). Ein auf einem Dokument 1, wie beispielsweise einer Banknote, einem Wertpapier, einem Kunstwerk oder einem anderen wertvollen Gegenstand appliziertes Merkmal 2, hergestellt aus einer Zubereitung, die die Variante D96N des Bakteriorhodopsins enthält, lässt sich z.B. dadurch prüfen, dass es bei Bestrahlen mit Licht 3 einer Leuchtdiode mit einem Emissionsmaximum im grünen oder gelben Bereich seine Farbe von purpur nach gelb ändert. Dies ist besonders leicht zu erkennen in 4, wenn nicht die ganze Fläche bestrahlt wird. Ohne weiteres Zutun, kehrt nach einigen Sekunden bis Minuten, je nach verwendeter Zubereitung, die purpurne Farbe zurück und der Anfangszustand ist wiederhergestellt. Alternativ kann durch Bestrahlen mit Licht 5 einer Leuchtdiode mit einem Emissionsmaximum im Blaubereich die purpurne Farbe sofort wiederhergestellt werden. Der technische Aufwand für die Prüfung ist minimal. Der Anwender kann mit dem bloßen Auge die Farbänderung verfolgen, der Messprozeß lässt sich aber auch maschinell durchführen.

### Beispiel 2: Kopierschutz

Ein Dokument 1, das ein erfindungsgemäßes Merkmal 2 enthält, bei dem eine bestimmte Menge lichtempfindlichen Bakteriorhodopsin-Materials, z.B. der Wildtypform des Bakteriorhodopsins, und ein Bakteriorhodopsin-Material mit höherer Lichtempfindlichkeit, z.B. der Bakteriorhodopsin-Variante D96N kombiniert eingesetzt werden, weist im unbelichteten Zustand eine einheitliche Fläche gleicher Färbung auf (Abbildung 2). Statt des unempfindlichen Bakteriorhodopsin-Materials kann auch ein geeigneter Farbstoff gleicher Färbung verwendet werden. Wird dieses Dokument mit Hilfe eines Photokopierers 3 vervielfältigt, so wird durch die Bestrahlung mit Licht während des Kopiervorgangs das lichtempfindliche Bakteriorhodopsin-Material stärker gebleicht als das umgebende Material geringerer Lichtempfindlichkeit. Deshalb wird die Kopie 4 ein Niedrigsicherheitsmerkmal 5 aufweisen, bei dem dauerhaft das Merkmal seine unterschiedliche Färbung behalten wird. Hieran wird die Kopie eindeutig als Kopie zu erkennen sein.

### Beispiel 3: Nachträgliche Behandlung, Hilfsstoffe und Applikationsverfahren

### a) Nachträgliche Quervernetzung

Ein Substrat mit einer getrockneten photochromen Schicht, bestehend aus dem Matrixmaterial und dem Bakteriorhodopsin, wurde für 15 Minuten mit einer 40% Glutardialdehydlösung überschichtet. Danach wurde die Glutardialdehydlösung mit Wasser abgewaschen. Die photochrome Schicht ist durch die Behandlung wasserunlöslich geworden.

### b) Photochemisch

10 mg Purpurmembran (BR-D96N) wurden in 4 ml einer UVhärtenden Farbe (IFS3000, Fa. Schmitt) fein verteilt. Nach Applikation der Mischung mittels einer Rakel erfolgte die Aushärtung über Nacht unter UV-Licht.

### c) Applikation

### Siebdruck

Das Prinzip des Siebdrucks ist Durchdruck, ähnlich einer Schabloniertechnik. Die Druckform besteht aus einem Siebgewebe, welches mit einer farbundurchlässigen Sperrschicht versehen wird. Das Druckmotiv bleibt offen. Der Druck erfolgt durch das Abziehen des mit Farbe gefüllten Siebes mit einer Rakel. Die Farbe wird dabei auf das darunterliegende Substrat übertragen. Zur Herstellung einer Siebdruckfarbe wurden in eine 7,2% PVA-Lösung (Mowiol Typ 56-98) 100 mg/ml Pigment (Bakteriorhodopsin-Wildtyp) über Nacht eingerührt. Bei Übereinstimmung der rheologischen Eigenschaften mit einer Standardprobe konnte die erhaltene Mischung mit einer herkömmlichen Siebdruckmaschine verdruckt werden.

### Offsetdruck

In 5 ml einer Farbe ohne Pigment (Fa. Schmitt, IUF01) wurden bei 50°C 1 g Purpurmembran (BR-D96N) eingerührt. Die so erhaltene Mischung konnte mittels gängiger Offset-Technik verdruckt werden.

### d) Mechanischer Schutz

### Laminieren

Die auf ein Substrat applizierte photochrome Mischung, die Bakteriorhodopsin enthält, wurde mit einem Heißlaminiergerät (GPM, Mylam 9) mit einer Folientasche vom Typ GHQ-120TR bei einer Temperatur von 90 - 140°C einlaminiert.

### e) Hilfsstoffe

### Vermeidung der Schaumbildung

PVA (Typ Mowiol 56-98, 68 mg/ml) wurde bei 50°C in Wasser gelöst. Zu dieser Mischung wurde Purpurmembran in gefriergetrockneter Form hinzugegeben, so dass eine Konzentration von 11 mg/ml erhalten wurde. In diese Mischung wurde bei Raumtemperatur 1-Octanol (1% (V/V)) untergerührt. Die so erhaltene Mischung hatte verbesserte Eigenschaften beim Druckauftrag bezüglich der Blasenbildung.

### Abschirmung von UV-Strahlung

Zum Schutz des photochromen Pigments wurde die Mischung mit einem der folgenden UV-Absorber oder einem Derivat davon in Konzentration von 1 - 30%, bevorzugt 3 - 10% w/w versetzt: Benzophenon, Hydroxynaphthochinon, Phenylbenzoxazol, Zimtsäureester, Sulfonamid, Aminobenzoesäureester.

### Beispiel 4

Ein Gebrauchsdokument wie z.B. ein Geldschein, der mit der Bakteriorhodopsin enthaltenen Sicherheitsmarkierung versehen ist. Bei Belichtung verändert die Sicherheitsmarkierung ihre Farbe von Violett nach Gelb. Nach einer kurzen Zeit (ca. 30 - 60 s) und/oder bei Belichtung mit Licht des blauen Wellenlängenbereichs kehrt die ursprünglich violette Farbe wieder zurück. Ein solches Gebrauchsdokument wäre gegen eine unerlaubte Vervielfältigung bzw. eine Fälschung gesichert.

### Beispiel 5

Wie Beispiel 4, es erfolgt jedoch unter Belichtung mit Licht des blauen Wellenlängenbereichs ein Farbwechsel von Gelb nach Violett. Nach der Belichtung kehrt die ursprüngliche Farbe durch das Umgebungslicht zurück.

### Beispiel 6

Ein Dokument, wie z.B. ein Vertrag, der mit einem violetten Balken versehen ist. Dieser Balken wird durch zweimaliges Drucken mit zwei Schablonen, die sich wie Positiv und Negativ verhalten, hergestellt. Durch die Verwendung dieser beiden Schablonen ist es möglich, zwei Farbzubereitungen zu verwenden, die sich in ihrer Lichtsensitivität unterscheiden. Bei Belichtung mit Weißlicht verfärbt sich die lichtsensitivere Schicht von Violett nach Gelb, während die andere Schicht sich nicht verfärbt oder nur sehr schwach verfärbt. Dabei entsteht ein Farbkontrast. Damit ist es möglich, aus der vorher homogenen Fläche ein Wort (z.B. Original) oder jede beliebige andere Zeichenfolge und/oder Piktogramme hervorzuheben.

### Beispiel 7

Wie 6, es wird jedoch auf normales bzw. Photopapier gedruckt, das hinterher einlaminiert werden kann. An einem Markenartikel (Kleidungsstücke, wie z.B. Jeans o. ä.) befestigt bzw. als Beigabe zu einem Markenartikel, kann es dann dessen Authentizität sicherstellen und somit Produktpiraterie vorbeugen.

### Beispiel 8

Um ein Dokument vor der unerlaubten Vervielfältigung durch Kopieren zu schützen, wird wie bei 6 mit zwei Schablonen eine homogen erscheinende Fläche erzeugt. Ein Teil der homogenen Fläche vollzieht beim Kopieren einen Farbwechsel, so dass die Kopie durch eine inhomogene Fläche gekennzeichnet ist.

## Patentansprüche

1. Verfahren zur Sicherung der Authentizität eines Gegenstandes durch Applizieren einer photochromen Tinte auf den Gegenstand, wobei man eine photochrome Tinte verwendet, die mindestens eine Bakteriorhodopsin-Variante als photochromen Anteil enthält, welche bei Bestrahlung mit Licht im sichtbaren Wellenlängenbereich eine visuell detektierbare, als Niedrigsicherheitsmerkmal bei einer Authentizitätsprüfung nutzbare reversible Zustandsänderung erfährt und die zusätzlich zu dem Niedrigsicherheitsmerkmal ein oder mehrere visuell nicht detektierbare, nur mit instrumenteller Analytik nachweisbare Hochsicherheitsmerkmale aufweist.

2. Verfahren nach Anspruch 1, **dadurch gekennzeichnet, dass** die Bakteriorhodopsin-Variante ausgewählt wird aus Funktionsvarianten, Sequenzvarianten, Derivatisierungsvarianten, Chromophorvarianten, Isotopenvarianten oder/und Spin-Label-Varianten.

3. Verfahren nach Anspruch 1 oder 2, **dadurch gekennzeichnet, dass** eine Bakteriorhodopsin-Variante verwendet wird mit den Merkmalen:
a) der zur Ausbildung der Purpurmembran-Form des Proteins notwendige Bereich ist gegenüber dem Bakteriorhodopsin-Wildtyp unverändert,
b) in Schleifen oder/und dem C-Terminus oder/und dem N-Terminus der Polypeptidkette ist mindestens ein Aminosäure-Austausch gegenüber dem Bakteriorhodopsin-Wildtyp vorhanden, umfassend Deletionen, Additionen, Insertionen oder/und Substitutionen, wobei diese Aminosäure-Austausche nicht zu einer Änderung der durch den photochromen Bereich bestimmten photochromen Eigenschaften des Bakteriorhodopsins führen.

4. Verfahren nach Anspruch 3, **dadurch gekennzeichnet, dass** eine Bakteriorhodopsin-Variante verwendet wird, bei der am C-Terminus mindestens eine Aminosäure addiert ist.

5. Verfahren nach Anspruch 3 oder 4, **dadurch gekennzeichnet, dass** die Bakteriorhodopsin-Variante mindestens ein Cystein enthält.

6. Verfahren nach einem der vorhergehenden Ansprüche, **dadurch gekennzeichnet, dass** die verwendete Bakteriorhodopsin-Variante einen vom Wildtyp verschiedenen Photozyklus oder und eine vom Wildtyp verschiedene Anfangsfarbe besitzt.

7. Verfahren nach einem der vorhergehenden Ansprüche, **dadurch gekennzeichnet, dass** eine BR-Variante ausgewählt aus D36C, D96N und D85N verwendet wird.

8. Verfahren nach einem der vorhergehenden Ansprüche, **dadurch gekennzeichnet, dass** die photochrome Tinte ein weiteres polymeres Molekül umfasst.

9. Verfahren nach einem der vorhergehenden Ansprüche, **dadurch gekennzeichnet, dass** eine Bakteriorhodopsin-Variante verwendet wird, bei der ein polymeres Molekül an Bakteriorhodopsin gekoppelt ist.

10. Verfahren nach Anspruch 9, **dadurch gekennzeichnet, dass** das polymere Molekül ein Polypeptid ist, das gegebenenfalls Nicht-Peptid-Anteile aufweist.

11. Verfahren nach Anspruch 9, **dadurch gekennzeichnet, dass** das polymere Molekül Nukleinsäuren oder/und Derivate davon umfasst, die gegebenenfalls Nicht-Nukleinsäure-Anteile aufweisen.

12. Verfahren nach Anspruch 11, **dadurch gekennzeichnet, dass** die an das Bakteriorhodopsin gekoppelten Nukleinsäuren und/oder deren Derivate durch geeignete Amplifikationsreaktionen detektiert werden.

13. Verfahren nach Anspruch 12, **dadurch gekennzeichnet, dass** die Sequenz der Amplifikationsprodukte bestimmt wird.

14. Verfahren nach einem der vorhergehenden Ansprüche, **dadurch gekennzeichnet, dass** die photochrome Zubereitung mindestens zwei Bakteriorhodopsin-Varianten oder/und eine Bakteriorhodopsin-Variante mit mindestens zwei Modifikationen umfasst.

15. Verfahren nach einem der vorhergehenden Ansprüche, **dadurch gekennzeichnet, dass** weiterhin Hilfsstoffe eingesetzt werden
a) zur Vermeidung der Schaumbildung und zur Verbesserung der Benetzungseigenschaften oder/und
b) zur Mikroverkapselung der Materialien der Tinte und zur Abschirmung von UV-Strahlen zur Erhöhung der Stabilität oder/und
c) zur Beeinflussung des Absorptionsspektrums von Bakteriorhodopsin-Material zur Verbesserung des visuellen optischen Eindrucks.

16. Verfahren nach einem der vorhergehenden Ansprüche, **dadurch gekennzeichnet, dass** weiterhin Matrixmaterialien eingesetzt werden zur Fixierung des photochromen Materials durch
a) physikalischen Einschluss oder/und
b) kovalente Kopplung an das Matrixmaterial oder/und
c) Quervernetzung.

17. Verfahren nach Anspruch 16, **dadurch gekennzeichnet, dass** die Bakteriorhodopsin-Variante in einer mittels UV-Licht aushärtbaren Farbe fein verteilt wird und die Quervernetzung durch Bestrahlung mit UV-Licht erfolgt.

18. Verfahren nach einem der vorhergehenden Ansprüche, **dadurch gekennzeichnet, dass** die photochrome Zubereitung selbst oder ein Hilfssubstrat, auf dem die Tinte aufgebracht ist, auf den Gegenstand appliziert wird.

19. Verfahren nach einem der vorhergehenden Ansprüche, **dadurch gekennzeichnet, dass** auf dem zu markierenden Gegenstand zwei insbesondere aneinandergrenzende Flächen A und B appliziert werden, wobei die erste Fläche A mit der Bakteriorhodopsin enthaltenden photochromen Zubereitung markiert wird, und das zweite Feld B mit einem nichtphotochromen Farbstoff versehen wird, dessen spektrale Remission sich im unbelichteten Zustand nicht von der des ersten Feldes unterscheidet, aber nach der Belichtung eine gegenüber dem ersten Feld unterschiedliche Remission zeigt.

20. Verfahren nach einem der vorhergehenden Ansprüche, wobei auf dem zu markierenden Gegenstand zwei insbesondere aneinandergrenzende Flächen A und B appliziert werden, wobei das erste Feld mit einer ersten Bakteriorhodopsin enthaltenden photochromen Zubereitung markiert wird, und das zweite Feld mit einer zweiten photochromen Zubereitung versehen wird, deren Lichtempfindlichkeit sich von der der ersten unterscheidet, so dass sich das zweite Feld im unbelichteten Zustand in seiner spektralen Remission nicht von dem ersten Feld unterscheidet, aber nach der Belichtung eine gegenüber dem ersten Feld unterschiedliche Remission zeigt.

21. Photochrome Tinte, **dadurch gekennzeichnet, dass** sie mindestens eine Bakteriorhodopsin-Variante enthält.

22. Gegenstand, markiert gemäß einem Verfahren nach einem der Ansprüche 1 bis 20.

23. Verfahren zur Sicherung der Authentizität eines Gegenstandes durch Applizieren einer photochromen Tinte auf den Gegenstand, wobei man eine photochrome Tinte verwendet, die Bakteriorhodopsin-Wildtyp als photochromen Anteil enthält, welcher bei Bestrahlung mit Licht im sichtbaren Wellenlängenbereich eine visuell detektierbare, als Niedrigsicherheitsmerkmal bei einer Authentizitätsprüfung nutzbare reversible Zustandsänderung erfährt und die weiterhin einen Hilfsstoff enthält, welcher Wasser bindet oder/und die Protonenverfügbarkeit reduziert.

## Claims

1. A method for protecting the authenticity of an object by applying a photochromic ink to the object, which comprises using a photochromic ink which contains as photochromic portion at least one bacteriorhodopsin variant which when illuminated with light of the visible wavelength range undergoes a visually detectable reversible change of state, utilizable as low-level security feature for an authenticity check, and which ink has in addition to the low-level security feature one or more visually undetectable high-level security features detectable only by instrumental analysis.

2. The method as claimed in claim 1, **characterized in that** the bacteriorhodopsin variant is selected from functional variants, sequence variants, derivatization variants, chromophoric variants, isotope variants or/and spin label variants.

3. The method as claimed in claim 1 or 2, **characterized in that** a bacteriorhodopsin variant having the following features is used:
a) the region required for the formation of the purple membrane form of the protein is unchanged compared with the bacteriorhodopsin wild-type,
b) loops or/and the C terminus or/and the N terminus of the polypeptide chain contain, compared with the bacteriorhodopsin wild-type, at least one amino acid exchange comprising deletions, additions, insertions or/and substitutions, these amino acid exchanges not changing the photochromic properties of bacteriorhodopsin, which properties are determined by the photochromic region.

4. The method as claimed in claim 3, **characterized in that** a bacteriorhodopsin variant in which at least one amino acid has been added at the C terminus is used.

5. The method as claimed in claim 3 or 4, **characterized in that** the bacteriorhodopsin variant contains at least one cysteine.

6. The method as claimed in any of the preceding claims, **characterized in that** the bacteriorhodopsin variant used has a photocycle different from the wild-type and an initial color different from the wild-type.

7. The method as claimed in any of the preceding claims, **characterized in that** a BR variant selected from D36C, D96N and D85N is used.

8. The method as claimed in any of the preceding claims, **characterized in that** the photochromic ink comprises another polymeric molecule.

9. The. method as claimed in any of the preceding claims, **characterized in that** a bacteriorhodopsin variant in which a polymeric molecule is coupled to bacteriorhodopsin is used.

10. The method as claimed in claim 9, **characterized in that** the polymeric molecule is a polypeptide which, where appropriate, has non-peptide portions.

11. The method as claimed in claim 9, **characterized in that** the polymeric molecule comprises nucleic acids or/and derivatives thereof which, where appropriate, have non-nucleic acid portions.

12. The method as claimed in claim 11, **characterized in that** the nucleic acids coupled to the bacteriorhodopsin and/or their derivatives are detected by suitable amplification reactions.

13. The method as claimed in claim 12, **characterized in that** the sequence of the amplification products is determined.

14. The method as claimed in any of the preceding claims, **characterized in that** the photochromic preparation comprises at least two bacteriorhodopsin variants or/and one bacteriorhodopsin variant with at least two modifications.

15. The method as claimed in any of the preceding claims, **characterized in that** furthermore auxiliaries are employed
a) for preventing foaming and for improving the wetting properties or/and
b) for microencapsulating the ink materials and for screening off UV rays to improve stability or/and
c) for influencing the absorption spectrum of bacteriorhodopsin material to improve the visual optical impression.

16. The method as claimed in any of the preceding claims, **characterized in that** furthermore matrix materials are employed for attaching the photochromic material by
a) physical inclusion or/and
b) covalent coupling to the matrix material or/and
c) crosslinking.

17. The method as claimed in claim 16, **characterized in that** the bacteriorhodopsin variant is finely distributed in a color curable by means of UV light and that crosslinking is carried out by irradiation with UV light.

18. The method as claimed in any of the preceding claims, **characterized in that** the photochromic preparation itself or an auxiliary substrate to which the ink has been applied is applied to the object.

19. The method as claimed in any of the preceding claims, **characterized in that** two, in particular adjacent, areas A and B are applied to the object to be labeled, the first area A being labeled with the photochromic preparation containing bacteriorhodopsin and the second field B being provided with a non-photochromic dye whose spectral emission in the unexposed state is not different from that of the first field but which displays, after exposure, a different emission compared with the first field.

20. The method as claimed in any of the preceding claims, in which two, in particular adjacent, areas A and B are applied to the object to be labeled, the first field being labeled with a first photochromic preparation containing bacteriorhodopsin and the second field being provided with a second photochromic preparation whose light sensitivity differs from that of the first preparation so that in the unexposed state the second field is not different in its spectral emission from the first field but displays, after exposure, a different emission compared with the first field.

21. A photochromic ink, **characterized in that** it contains at least one bacteriorhodopsin variant.

22. An object labeled according to a method as claimed in any of claims 1 to 20.

23. A method for protecting the authenticity of an object by applying a photochromic ink to the object, which comprises using a photochromic ink containing as photochromic portion bacteriorhodopsin wild-type which, when illuminated with light of the visible wavelength range, undergoes a visually detectable reversible change of state, utilizable as low-level security feature in an authenticity check, and which ink furthermore contains an auxiliary substance which binds water or/and reduces the availability of protons.

## Revendications

1. Procédé pour garantir l'authenticité d'un objet par application d'une encre photochrome sur l'objet, dans lequel on utilise une encre photochrome qui contient au moins une variante bactériorhodopsine en tant que partie photochrome qui, lors de l'irradiation à la lumière dans le domaine des longueurs d'ondes visibles, subit une modification d'état réversible utile, visuellement détectable lors d'une vérification d'authenticité, en tant qu'indice de basse sécurité et qui, en plus de l'indice de basse sécurité, présente une ou plusieurs indices de haute sécurité, non détectables, uniquement décelables au moyen d'instruments d'analyse.

2. Procédé selon la revendication 1, **caractérisé en ce que** la variante bactériorhodopsine est choisie à partir de variantes fonctionnelles, de variantes séquentielles, de variantes de formation de dérivés, de variantes chromophores, de variantes isotopes ou/et de variantes spin-label.

3. Procédé selon la revendication 1 ou 2, **caractérisé en ce que** l'on utilise une variante bactériorhodopsine présentant les particularités suivantes :
a) le domaine nécessaire pour la production de la forme à membrane pourpre de la protéine est inchangé vis-à-vis du type sauvage bactériorhodopsine,
b) dans les boucles ou/et dans la terminaison C ou/et la terminaison N de la chaîne polypeptide, il existe au moins un remplacement des acides aminés vis-à-vis du type sauvage bactériorhodopsine, comprenant les délétions, additions, insertions, ou/et substitutions, moyennant quoi ces remplacements d'acides aminés ne conduisent pas à une modification des propriétés photochromes de la bactériorhodopsine, déterminées par le domaine photochrome.

4. Procédé selon la revendication 3, **caractérisé en ce que** l'on utilise une variante bactériorhodopsine dans laquelle sur la terminaison C est ajouté au moins un acide aminé.

5. Procédé selon la revendication 3 ou 4, **caractérisé en ce que** la variante bactériorhodopsine contient au moins une cystéine.

6. Procédé selon l'une des revendications précédentes, **caractérisé en ce que** la variante bactériorhodopsine utilisée possède un photocycle différent du type sauvage ou/et une couleur de départ différente du type sauvage.

7. Procédé selon l'une des revendications précédentes, **caractérisé en ce que** l'on utilise une variante BR choisie parmi D36C, D96N et D85N.

8. Procédé selon l'une des revendications précédentes, **caractérisé en ce que** l'encre photochrome comprend une molécule polymère supplémentaire.

9. Procédé selon l'une des revendications précédentes, **caractérisé en ce que** l'on utilise une variante bactériorhodopsine, dans laquelle une molécule polymère est couplée à la bactériorhodopsine.

10. Procédé selon la revendication 9, **caractérisé en ce que** la molécule polymère est un polypeptide qui présente éventuellement des parties non peptides.

11. Procédé selon la revendication 9, **caractérisé en ce que** la molécule polymère comprend des acides nucléiques ou/et des dérivés de ceux-ci, qui présentent éventuellement des parties d'acides non nucléiques.

12. Procédé selon la revendication 11, **caractérisé en ce que** les acides nucléiques couplés à la bactériorhodopsine et/ou leurs dérivés sont détectés par des réactions d'amplification appropriées.

13. Procédé selon la revendication 12, **caractérisé en ce que** l'on détermine la séquence des produits d'amplification.

14. Procédé selon l'une des revendications précédentes, **caractérisé en ce que** la préparation photochrome comprend au moins deux variantes bactériorhodopsine ou/et une variante bactériorhodopsine avec au moins deux modifications.

15. Procédé selon l'une des revendications précédentes, **caractérisé en ce que** de plus, il est mis en oeuvre des adjuvants
a) pour éviter la formation de mousse et pour améliorer les propriétés de mouillage ou/et
b) pour la micro-encapsulation des matériaux de l'encre et pour la protection contre les rayons UV pour augmenter la stabilité ou/et
c) pour influer sur le spectre d'absorption du matériau bactériorhodopsine afin d'améliorer l'impression optique visuelle.

16. Procédé selon l'une des revendications précédentes, **caractérisé en ce que** de plus, il est mis en oeuvre des matériaux matriciels pour la fixation du matériau photochrome par le biais de
a) l'inclusion physique ou/et
b) le couplage par covalence sur le matériau matriciel ou/et
d) la réticulation.

17. Procédé selon la revendication 16, **caractérisé en ce que** la variante bactériorhodopsine est finement répartie dans une couleur durcissable au moyen de la lumière UV et la réticulation s'effectue par irradiation à la lumière UV.

18. Procédé selon l'une des revendications précédentes, **caractérisé en ce que** la préparation photochrome elle-même ou un substrat auxiliaire, sur lequel est déposé l'encre, sont appliqués sur l'objet.

19. Procédé selon l'une des revendications précédentes, **caractérisé en ce que** sur l'objet à marquer, on applique deux surfaces A et B, en particulier limitrophes l'une de l'autre, la première surface A étant marquée avec la préparation photochrome contenant la bactériorhodopsine et la seconde surface B étant dotée d'un colorant non photochrome dont la réflexion spectrale ne se différencie pas de celle de la première surface à l'état non éclairé, mais qui, après l'éclairage, présente une réflexion différente de celle de la première surface.

20. Procédé selon l'une des revendications précédentes, dans lequel sur l'objet à marquer, on applique deux surfaces A et B, en particulier limitrophes l'une de l'autre, la première surface étant marquée avec une préparation photochrome contenant une première bactériorhodopsine, et la seconde surface étant dotée d'une seconde préparation photochrome dont la sensibilité à la lumière se distingue de celle de la première surface de sorte qu'à l'état non éclairé, la seconde surface ne se différencie pas de la première dans sa réflexion spectrale, mais présente, après éclairage, une réflexion différente de celle de la première surface.

21. Encre photochrome, **caractérisée en ce qu'**elle contient au moins une variante bactériodopsine.

22. Objet, marqué selon un procédé de l'une des revendications 1 à 20.

23. Procédé pour garantir l'authenticité d'un objet par application d'une encre photochrome sur l'objet, dans lequel on utilise une encre photochrome contenant le type sauvage bactériorhodopsine en tant que partie photochrome qui, lors de l'irradiation à la lumière dans le domaine des longueurs d'ondes visibles, subit une modification d'état réversible utile, visuellement détectable, en tant qu' indice de basse sécurité lors d'une vérification d'authenticité et qui, de plus, contient un adjuvant qui lie l'eau ou/et réduit la disponibilité des protons.
